# EUROPÄISCHE PATENTSCHRIFT

(11) **EP 3 409 909 B1**
(45) Veröffentlichungstag und Bekanntmachung des Hinweises auf die Patenterteilung: **08.01.2020**
(21) Anmeldenummer: 17173968.3
(22) Anmeldetag: 01.06.2017
(51) Int. Cl.: F01D 25/24

(54) **TURBINENZWISCHENGEHÄUSE MIT ZENTRIERELEMENT UND DISTANZHALTEELEMENT**
INTERMEDIATE TURBINE HOUSING WITH CENTRING ELEMENT AND SPACER ELEMENT
BOÎTIER INTERMÉDIAIRE DE TURBINE COMPRENANT UN ÉLÉMENT DE CENTRAGE ET ÉCARTEUR

(43) Veröffentlichungstag der Anmeldung: 05.12.2018
(73) Patentinhaber: MTU Aero Engines AG, 80995 München (DE)
(72) Erfinder: Böck, Alexander, 82288 Kottgeisering (DE)

(56) Entgegenhaltungen:
- EP-A2- 0 924 387
- US-A1- 2016 245 102

## Beschreibung

Die vorliegende Erfindung betrifft ein Turbinenzwischengehäuse für eine Gasturbine, insbesondere Fluggasturbine, mit mehreren ersten Bauteilen und mehreren zweiten Bauteilen, die in Umfangsrichtung abwechselnd nebeneinander angeordnet sind und in Radialrichtung einen Heißgas führenden Strömungskanal begrenzen, wobei die ersten Bauteile jeweils zwei erste Überlappungsabschnitte aufweisen und die zweiten Bauteile jeweils zwei zweite Überlappungsabschnitte aufweisen, derart, dass in einem jeweiligen Bereich des Übergangs von einem ersten Bauteil zu einem zweiten Bauteil oder umgekehrt der erste Überlappungsabschnitt und der zweite Überlappungsabschnitt überlappend angeordnet sind, und mit wenigstens einem Zentrierelement, an dem die ersten Bauteile und die zweiten Bauteile entlang der Umfangsrichtung und in Radialrichtung abgestützt sind, derart, dass die ersten Bauteile und die zweiten Bauteile bezogen auf eine Zentralachse des Turbinenzwischengehäuses im Wesentlichen zentriert angeordnet sind, wobei die ersten Bauteile identisch mit den zweiten Bauteilen ausgebildet sind oder die ersten Bauteile sich von den zweiten Bauteilen unterscheiden.

Richtungsangaben wie "Axial-" bzw. "axial", "Radial-" bzw. "radial" und "Umfangs-" sind grundsätzlich auf die Maschinenachse der Gasturbine bezogen zu verstehen, sofern sich aus dem Kontext nicht explizit oder implizit etwas anderes ergibt. Die Maschinenachse der Gasturbine kann auch als Zentralachse des Turbinenzwischengehäuses bezeichnet werden.

Bei Turbinenzwischengehäusen sind die Bauteile des Heißgas führenden Strömungskanals in der Regel mittels sogenannter geschliffenere Überlappungen verbunden. An einem axial vorderen Bereich des Turbinenzwischengehäuses, der auch als Eintritt bezeichnet werden kann, ist es daher erforderlich, diese Bauteile über sogenannte Zentrierleisten in Umfangsrichtung zu verbinden. Derartige Zentrierleisten verhindern ein insbesondere radiales Aufklappen und Schwingen im Bereich der geschliffenen Überlappung. Die Zentrierleiste wird dabei axial in Nuten eingeschoben, die an den Bauteilen ausgebildet sind. Ferner wird die Zentrierleiste durch einen Sicherungsring gesichert.

Ein Beispiel für ein segmentiertes Deckband in einer Gasturbine ist aus der US20160245102A1 bekannt. Ein weiteres Beispiel für ein Gasturbinendeckband ist aus der EP0924387A2 bekannt.

Im Bereich der Gasturbinen, insbesondere der Turbinenzwischengehäuse für Gasturbinen wird vermehrt der Einsatz von alternativen Werkstoffen, beispielsweise keramischen Faserverbundwerkstoffen (Ceramic Matrix Composites, CMC), untersucht, um Gewichtseinsparungen und Wirkungsgradverbesserungen zu erreichen verglichen mit herkömmlichen Metallbauteilen. Entsprechend kommen oben beschriebene herkömmliche Anordnungen zum Zentrieren der Bauteile aus alternativen Werkstoffen nicht in Frage. Insbesondere ist es schwierig in Bauteilen aus alternativen Werkstoffen (radial) schmale Nuten vorzusehen, ohne dass hierdurch Nachteile bei der Festigkeit der Bauteile in Kauf genommen werden müssen.

Aufgabe der Erfindung ist es, ein Turbinenzwischengehäuse bereitzustellen, bei dem die obigen Nachteile in Bezug auf alternative Materialien vermieden werden.

Zur Lösung dieser Aufgabe wird vorgeschlagen, dass die ersten Bauteile und die zweiten Bauteile aus einem keramischen Faserverbundwerkstoff hergestellt sind und dass an jedem ersten Bauteil und an jedem zweiten Bauteil wenigstens ein erster Stützabschnitt und wenigstens ein zweiter Stützabschnitt vorgesehen sind, wobei der erste Stützabschnitt und der zweite Stützabschnitt so ausgebildet sind, dass sie das Zentrierelement in Radialrichtung von unterschiedlichen Seiten beaufschlagen, und wobei der zweite Stützabschnitt das Zentrierelement mittels eines Distanzhalteelements beaufschlagt.

Das Beaufschlagen bzw. Anliegen der ersten und zweiten Stützabschnitte auf unterschiedlichen Seiten des Zentrierelements ermöglicht über den gesamten Umfang eine sichere Zentrierung der ersten und zweiten Bauteile. Dabei werden die oben bereits beschriebenen bekannten, in Radialrichtung schmalen Nuten sozusagen aufgebrochen bzw. aufgeteilt. Durch das Einsetzen eines Distanzhalteelements kann ein Abstand zwischen dem zweiten Stützabschnitt und dem Zentrierelement überbrückt werden.

Unter einer "Zentrierung" der ersten und zweiten Bauteile im Sinne der vorliegenden Offenbarung kann insbesondere verstanden werden, dass die den Strömungskanal begrenzenden Flächen der ersten und zweiten Bauteile in Umfangsrichtung bündig aneinander anschließen, also in Umfangsrichtung an der Stelle des Übergangs kein radialer Sprung auftritt. Zudem können die den Strömungskanal begrenzenden Flächen zumindest annähernd auf einer Mittelfläche eines gemeinsamen Kegelstumpfes oder eines gemeinsamen Zylinders liegen, dessen Mittelachse mit der Mittelachse des Turbinenzwischengehäuses zusammenfällt.

Der erste Stützabschnitt und der zweite Stützabschnitt können aus dem keramischen Faserverbundwerkstoff hergestellt sein. Dabei kann der erste Stützabschnitt als radialer Vorsprung, insbesondere als radiale Verdickung, eines betreffenden ersten Bauteils oder eines betreffenden zweiten Bauteils ausgebildet ist. Ein solcher radialer Vorsprung bzw. ein radiale Verdickung kann bei der Herstellung aus keramischem Faserverbundwerkstoff entsprechend laminiert werden.

Ferner können alle radialen Vorsprünge das Zentrierelement in Radialrichtung von einer gleichen ersten Seite her beaufschlagen. Die erste Seite kann dabei die radial äußere Seite oder die radial innere Seite des Zentrierelements sein.

Der zweite Stützabschnitt kann hakenförmig ausgebildet sein, insbesondere als L-förmiger Haken. Ein solcher hakenförmiger Stützabschnitt kann in seinen Dimensionen so gewählt werden, dass er aus dem keramischen Faserverbundwerkstoff hergestellt, insbesondere laminiert werden kann. Dabei können insbesondere gebogene bzw. gekrümmte Bereiche des Hakens mit solchen Radien ausgebildet werden, dass die Laminatschichten in solchen Bereichen nicht geknickt bzw. gebrochen werden. Der L-förmige Haken erstreckt sich ausgehend vom entsprechenden ersten Bauteil oder zweiten Bauteil insbesondere hauptsächlich in Radialrichtung und in Axialrichtung, das heißt, dass die beiden Schenkel des L sich im Wesentlichen in Radialrichtung und in Axialrichtung erstrecken. Diese beiden Schenkel des Hakens können in der jeweiligen Richtung eine Länge aufweisen, die so gewählt ist, dass eine Herstellung aus keramischem Faserverbundwerkstoff möglich ist. Entsprechend kann mit der hakenförmigen Ausgestaltung des zweiten Stützabschnitts eine ausreichende Festigkeit des bzw. der zweiten Stützabschnitts bzw. zweiten Stützabschnitte erreicht werden.

Ferner können alle hakenförmigen zweiten Stützabschnitte das Distanzhalteelement hintergreifen und in Radialrichtung von einer gleichen zweiten Seite her beaufschlagen. Die zweite Seite kann dabei die radial äußere Seite oder die radial innere Seite des Zentrierelements bzw. des Distanzhalteelement sein. In jedem Fall sind die oben bereits angesprochene erste Seite und die zweite Seite unterschiedliche (radiale) Seiten des Zentrierelements bzw. des Distanzhalteelements.

Das Zentrierelement kann einen sich in Axialrichtung und Umfangsrichtung erstreckenden Zentrierabschnitt aufweisen, wobei die ersten Stützabschnitte und die betreffenden Distanzhalteelemente jeweils an dem Zentrierabschnitt, insbesondere auf gegenüberliegenden Seiten des Zentrierabschnitts, anliegen und wobei die zweiten Stützabschnitte jeweils an den betreffenden Distanzhalteelemente anliegen. Der Zentrierabschnitt entspricht dabei im Wesentlichen einer Art Federelement, das zwischen den ersten und zweiten Stützabschnitten bzw. zwischen den ersten Stützabschnitten und den Distanzhalteelemente aufgenommen ist, in etwa analog zur Aufnahme einer herkömmlichen Feder in einer herkömmlichen Nut, wobei nochmals darauf hingewiesen wird, dass bei der hier vorgestellten Zentrierung keine durchgehende Nut in den ersten und zweiten Bauteilen vorgesehen ist.

In manchen Ausführungsformen ist das Zentrierelement eine Zentrierleiste. Die Zentrierleiste kann eine Ringform aufweisen. Alternativ können auch mehrere Zentrierleisten vorgesehen sein, die jeweils die Form eines Ringsegments haben können. Jede Zentrierleiste kann dabei für die Zentrierung von zwei oder mehr Bauteilen vorgesehen sein.

Das Distanzhalteelement kann derart dimensioniert sein, dass es einen radialen Abstand zwischen dem zweiten Stützabschnitt und dem Zentrierelement überbrückt. Dabei kann das Distanzhalteelement mittels einer Nietverbindung mit dem zweiten Stützabschnitt verbunden sein. Dabei kann im zweiten Stützabschnitt eine entsprechende Öffnung vorgesehen sein, durch die hindurch ein Niet in eine korrespondierende Öffnung im Distanzhalteelement eingeführt werden kann.

Das Distanzhalteelement kann die Form eines winkligen U-Profils aufweisen, wobei die Basis des U-Profils dem hintergreifenden zweiten Stützabschnitt zugewandt ist und wobei die Schenkel des U-Profils sich im Wesentlichen in Radialrichtung erstrecken und auf dem Zentrierelement abgestützt sind. In der Basis des U-Profils kann auch die Öffnung für den Niet vorgesehen sein. Im verbundenen Zustand des Distanzhalteelements mit dem zweiten Stützabschnitt kann ein radial innen liegender Teil des Niets bzw. der Nietverbindung zwischen den beiden Schenkeln des U-Profils aufgenommen sein.

Am Zentrierelement können sich im Wesentlichen in Radialrichtung erstreckende Sicherungsvorsprünge vorgesehen sein, wobei das Distanzhalteelement in Umfangsrichtung zwischen zwei Sicherungsvorsprüngen aufgenommen ist. Die Sicherungsvorsprünge dienen insbesondere dazu, das Distanzhalteelement in seiner Lage in Umfangsrichtung zu sichern.

An jedem ersten Bauteil und an jedem zweiten Bauteil können wenigstens zwei zweite Stützabschnitte vorgesehen sein, wobei jeder zweite Stützabschnitt mittels eines Distanzhalteelements am Zentrierelement abgestützt ist. Ferner kann zwischen den ersten Stützabschnitten und dem Zentrierelement entlang der Umfangsrichtung wenigstens teilweise ein Hitzeschutzelement angeordnet sein, wobei an den ersten Bauteilen oder/und an den zweiten Bauteilen ein dritter Stützabschnitt vorgesehen sein kann, auf dem das Hitzeschutzelement aufliegt.

Ein jeweiliger erster Stützabschnitt und ein jeweils zugehöriger zweiter Stützabschnitt können an einer im Wesentlichen gleichen Umfangsposition vorgesehen sein. Insbesondere liegen sich jeweilige erste und zweite Stützabschnitte in Radialrichtung gegenüber, wobei zwischen ihnen das zugehörige Distanzhaltelement und das Zentrierelement aufgenommen ist.

Zwischen einem jeweiligen Distanzhalteelement und einem jeweils zugehörigen ersten Stützabschnitt kann eine Nut zur Aufnahme des Zentrierelements gebildet sein. Dabei kann die gebildete Nut kleiner sein als die radiale Erstreckung des jeweiligen Distanzhalteel e-ments, insbesondere beträgt die radiale Erstreckung der Nut höchstens 50% der radialen Erstreckung des Distanzhalteelements.

Die Erfindung betriff ferner auch eine Gasturbine, insbesondere Fluggasturbine mit einem oben beschriebenen Turbinenzwischengehäuse, wobei das Turbinenzwischengehäuse zwischen einer ersten Turbinenstufe, insbesondere Hochdruckturbine, und einer folgenden Turbinenstufe, insbesondere Mitteldruck oder Niederdruckturbine, angeordnet ist, wobei vorzugsweise das Zentrierelement, die ersten Stützabschnitte und die zweiten Stützabschnitte sich bezogen auf die Hauptströmungsrichtung der Gasturbine an die erste Turbinenstufe anschließen.

Nachfolgend wird die Erfindung unter Bezugnahme auf die anliegenden Figuren beispielhaft und nicht einschränkend beschrieben.
Fig. 1 zeigt in einer schematischen und vereinfachten Draufsicht in Axialrichtung, insbesondere in einer Übersicht und einer vergrößerten Detailansicht, erste und zweite Bauteile eines Strömungskanals eines Turbinenzwischengehäuses mit ihrem Überlappungsbereich und dem Zentrierelement.
Fig. 2 zeigt in den Teilfiguren A) bis C) drei vergrößerte Schnittdarstellungen etwa entsprechend den Schnittlinien A-A, B-B und C-C der Fig. 1.

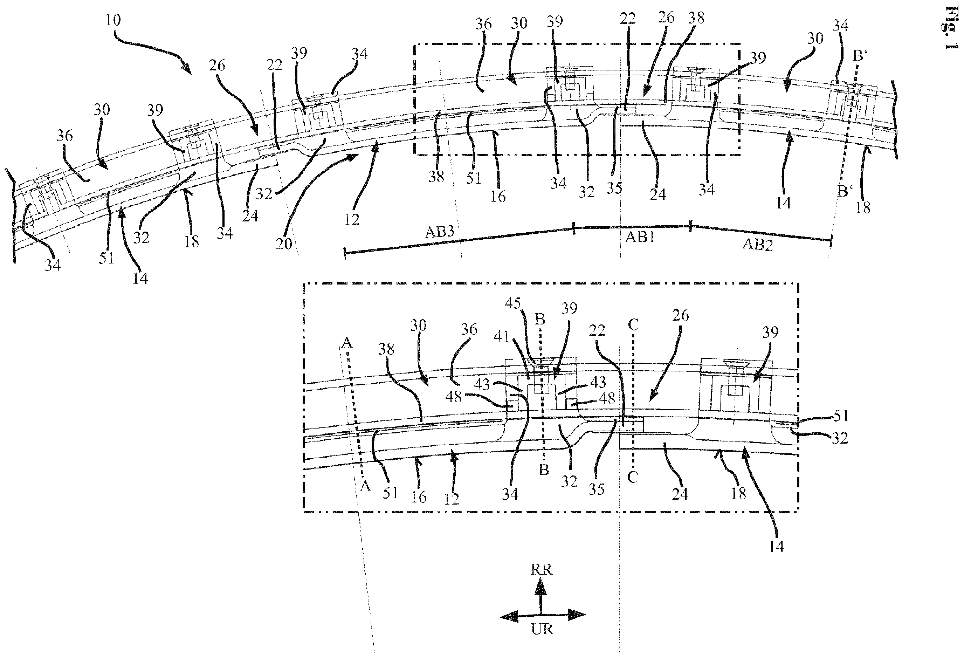

Fig. 1 zeigt in einer schematischen und vereinfachten Ansicht in Axialrichtung, insbesondere in einer Übersicht und einer vergrößerten Detailansicht (strichpunktiert umrandet), erste und zweite Bauteile eines Strömungskanals eines Turbinenzwischengehäuses mit ihrem Überlappungsbereich und dem Zentrierelement.

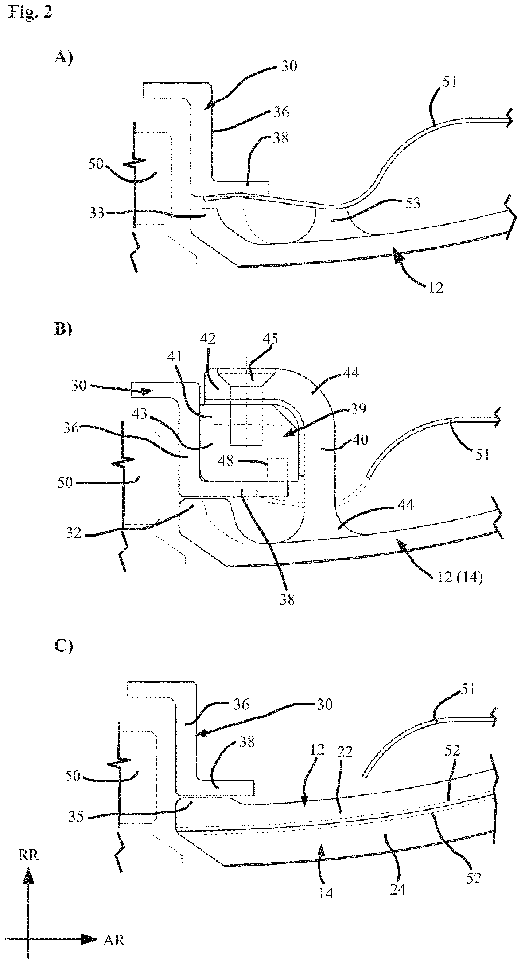

Fig. 2 zeigt in den Teilfiguren A) bis C) drei vergrößerte Schnittdarstellungen etwa entsprechend den Schnittlinien A-A, B-B und C-C der Fig. 1.

Fig. 1 zeigt einen Ausschnitt eines Turbinenzwischengehäuses 10 mit einem ersten Bauteil 12 und einem zweiten Bauteil 14. Das erste Bauteil 12 und das zweite Bauteil 14 sind in Umfangsrichtung UR nebeneinander angeordnet. Wie aus der Darstellung ersichtlich bildet eine abwechselnde Abfolge von ersten Bauteilen 12 und zweiten Bauteilen 14 einen im Wesentlichen geschlossenen Ring, von dem aber nur ein Ringsegment in der Fig. 1 dargestellt ist.

Die ersten Bauteile 12 und die zweiten Bauteile 14 weisen eine jeweilige Seite 16, 18 auf, die einem Heißgas führenden Strömungskanal 20 zugewandt ist. Anders ausgedrückt begrenzen die ersten Bauteile 12 und die zweiten Bauteile 14 den Heißgas führenden Strömungskanal 20. Die hier dargestellten ersten Bauteile 12 und die zweiten Bauteile 14 bilden eine radial äußere Begrenzung des Heißgas führenden Strömungskanals 20. Auf der vom Heißgas führenden Strömungskanal 20 abgewandten Seite sind die Bauteile 12, 14 mit nicht dargestellten Strukturbauteilen des Turbinenzwischengehäuses 10 verbunden. Es wird darauf hingewiesen, dass die Bauteile 12, 14 nicht nur radial außen eingesetzt werden können (bezogen auf den Strömungskanal 20 mit einer konkaven Krümmung), sondern dass sie auch als radial innere Begrenzung des Heißgas führenden Strömungskanals dienen können, wobei die Bauteile 12, 14 in einem solchen Fall entsprechend eine andere Krümmung (bezogen auf den Strömungskanal 20 konvex) aufweisen würden als die in Fig. 1 dargestellten Bauteile 12, 14.

Die ersten Bauteile 12 weisen jeweilige erste Überlappungsabschnitte 22 auf. Die zweiten Bauteile 14 weisen jeweilige zweite Überlappungsabschnitte 24 auf. An einem Übergang 26 von einem ersten Bauteil 12 zu einem zweiten Bauteil 14 sind der erste Überlappungsabschnitt 22 und der zweite Überlappungsabschnitt 24 in Radialrichtung RR übereinander angeordnet. Der erste Überlappungsabschnitt 22 und der zweite Überlappungsabschnitt 24 liegen aneinander an, so dass der Heißgas führende Strömungskanal 20 im Wesentlichen abgedichtet ist. Die Überlappung bei den Übergängen 26 ist so gewählt, dass sie auch bei Expansion bzw. Kontraktion der ersten Bauteile 12 bzw. der zweiten Bauteile 14 aufgrund thermischer Einwirkung erhalten bleibt. Mit anderen Worten sind die ersten Bauteile 12 und die zweiten Bauteile 14 wenigstens in Umfangsrichtung UR relativ zueinander beweglich.

Aus der Fig. 1 ist ersichtlich, dass die ersten Bauteile 12 und die zweiten Bauteile in dieser Ausführungsform unterschiedlich ausgebildet sind. Dabei sind die ersten Bauteile 12 so ausgebildet, dass ihre ersten Überlappungsabschnitte im radial außen angeordnet sind, wobei die zweiten Überlappungsabschnitte 24 der zweiten Bauteile 14 immer radial innen angeordnet sind.

Denkbar ist auch eine Ausgestaltung, bei der die ersten Bauteile und die zweiten Bauteile identisch aufgebaut, beispielsweise so, dass jedes Bauteil an einem Umfangsende einen radial innen liegenden Überlappungsabschnitt aufweist und am anderen Umfangsende einen radial außen liegenden Überlappungsabschnitt aufweist. Auch in einem solchen Falle können die identischen Bauteile als erstes und zweites Bauteil angesprochen werden und entsprechend weisen diese gleichen ersten und zweiten Bauteile auch jeweilige erste und zweite Überlappungsabschnitte auf, wobei für ein erstens Bauteil sowohl der radial innen liegende Überlappungsabschnitt als auch der radial außen liegende Überlappungsabschnitt als erste Überlappungsabschnitte bezeichnet werden. Die verwendete Nummerierung der Bauteile und der Überlappungsabschnitte setzt also keine zwingende Verschiedenheit der gleich benannten Komponenten voraus, sondern dient im Wesentlichen nur der einfacheren Ansprache und Identifizierung im Rahmen der vorliegenden Beschreibung.

Die ersten Bauteile 12 und die zweiten Bauteile 14 sind aus einem keramischen Faserverbundwerkstoff hergestellt, der nachfolgend als CMC angesprochen wird. Da Bauteile aus CMC in der Regel durch Laminieren von verschiedenen Schichten hergestellt werden, wobei insbesondere auch dem Verlauf der Fasern entsprechend der Formgebung des fertigen Bauteils Rechnung getragen werden muss, ist es erforderlich, die ersten und zweiten Bauteile 12, 14 so zu gestalten, dass sowohl deren Herstellung aus CMC möglich ist, als auch deren Zentrierung bezogen auf die Maschinenachse gewährleistet werden kann.

Für die Zentrierung der ersten und zweiten Bauteile 12, 14 umfasst das Turbinenzwischengehäuse 10 wenigstens ein Zentrierelement 30, an dem die ersten und zweiten Bauteile 12, 14 abgestützt werden können. Das Zentrierelement 30 und die Anordnung der ersten und zweiten Bauteile 12, 14 an dem Zentrierelement 30 wird nachfolgend auch unter Bezugnahme auf die Schnittdarstellungen der Fig. 2A bis 2C erläutert.

Sowohl das erste Bauteil 12, als auch das zweite Bauteil 14 weisen jeweilige erste Stützabschnitte 32 und jeweilige zweite Stützabschnitte 34 auf. Dabei liegen die ersten Stützabschnitte 32 von der einen Seite an dem betreffenden Zentrierelement 30 an, im Ausführungsbeispiel von radial innen. Die zweite Stützabschnitte 34 liegen von der anderen Seite an dem betreffenden Zentrierelement 30 an, im Ausführungsbeispiel von radial außen.

Unter erneuter Bezugnahme auf die Fig. 1 ist ersichtlich, dass die zweiten Stützabschnitte allgemein mit einem Abstand AB in Umfangsrichtung UR zueinander angeordnet sind. Bezogen auf den vergrößerten Ausschnitt der Fig. 1 sind der zweite Stützabschnitt 34 (links in der Darstellung) des ersten Bauteils 12 und der zweite Stützabschnitt 34 des zweiten Bauteils 14 mit einem Abstand AB1 zueinander angeordnet. Zwischen dem zweiten Stützabschnitt 34 des zweiten Bauteils 14 und einem weiteren (benachbarten) zweiten Stützabschnitt 34 des zweiten Bauteils 14 ist ein Abstand AB2 vorgesehen (Fig. 1, rechts). Ferner ist zwischen dem zweiten Stützabschnitt 34 des ersten Bauteils 12 und einem weiteren (benachbarten) zweiten Stützabschnitt 34 des ersten Bauteils 12 ein Abstand AB3 vorgesehen (Fig. 1, links). Die Abstände AB1, AB2, AB3 können voneinander verschieden sein. Bei der vorliegenden Ausführungsform ist der Abstand AB1 am kleinsten, der Abstand AB2 größer als der Abstand AB1. Der Abstand AB3 ist etwas größer gewählt als die Abstände AB1 und AB2. Ein Abstand AB kann dabei eine gerade Verbindungslinie sein, die zwei Punkte verbindet mit gleichem radialen Abstand von der Maschinenachse, wobei die beiden Punkte bezogen auf eine Ausdehnung in Umfangsrichtung des betreffenden Stützabschnitts beispielsweise etwa mittig angeordnet ist.

Bei der hier vorgestellten Ausführungsform weist das erste Bauteil 12 in Umfangsrichtung UR gesehen zwei zweite Stützabschnitte 34 auf, die in Radialrichtung RR gegenüber von jeweiligen ersten Stützabschnitten 32 angeordnet sind. Anders ausgedrückt sind die ersten Stützabschnitte 32 und die zweiten Stützabschnitte 34 an im Wesentlichen gleichen oder identischen oder korrespondierenden Umfangspositionen angeordnet. Das zweite Bauteil 14 weist drei zweite Stützabschnitte 34 auf, von denen aber jeweils nur zwei in der Fig. 1 ersichtlich sind. Es wird darauf hingewiesen, dass die Anzahl der zweiten Stützabschnitte 34 pro Bauteil 12, 14 veränderbar bzw. wählbar ist. Wird beispielsweise daran gedacht, dass die ersten und zweiten Bauteile 12, 14 als radial innere Begrenzung des Heißgas führenden Strömungskanals ausgeführt sind (hier nicht dargestellt), sind aufgrund des kleineren Umfangs entweder weniger Stützabschnitte 34 pro Bauteil 12, 14 vorzusehen oder/und die Abstände zwischen den Stützabschnitten 34 sind zu vergrößern bzw. zu verändern.

Das Zentrierelement 30 weist einen zweifach abgewinkelten Querschnitt auf mit einem Dichtungsabschnitt 36 und einem Zentrierabschnitt 38. Der Dichtungsabschnitt 36 erstreckt sich im Wesentlichen in Radialrichtung RR und Umfangsrichtung UR. Der Zentrierabschnitt 38 erstreckt sich im Wesentlichen in Axialrichtung AR und Umfangsrichtung UR. Der Zentrierabschnitt 38 und der Dichtungsabschnitt 36 sind im Wesentlichen orthogonal zueinander angeordnet. Der Dichtungsabschnitt 36 dient insbesondere dazu, Fluidströmungen außerhalb des Heißgas führenden Strömungskanals einzuschränken. Am Zentrierabschnitt 38 sind die ersten und zweiten Stützabschnitte 32, 34 der betreffenden ersten bzw. zweiten Bauteile 12, 14 abgestützt.

Die Schnittdarstellung der Fig. 2A zeigt den Schnitt entsprechend der Schnittlinie A-A der Fig. 1. Radial innen vom Zentrierabschnitt 38 ist eine als radiale Verdickung 33 des ersten Bauteils 12 angeordnet. Diese radiale Verdickung 33 liegt in diesem Umfangsbereich nicht am Zentrierabschnitt 38 an. In dieser Darstellung ist auch ein Hitzeschutzelement 51 dargestellt. Das Hitzeschutzelement 51 ist hier zwischen dem Zentrierabschnitt 38 und dem ersten Stützabschnitt 32 angeordnet. Das erste Bauteil 12 umfasst an seiner radial äußeren Seite noch einen dritten Stützabschnitt 53 auf, an dem das Hitzeschutzelement 51 gelagert ist. Entsprechend kann gesagt werden, dass das Hitzeschutzelement 51 zwischen dem Zentrierabschnitt 38 und dem dritten Stützabschnitt 53 aufgenommen, insbesondere klemmend aufgenommen ist.

Im Bereich des Schnitts B-B (Fig. 1), der in der Fig. 2B dargestellt ist, hintergreift der zweite Stützabschnitt 34 den Lagerabschnitt 38 des Zentrierelements 30. Der zweite Stützabschnitt 34 ist hakenförmig ausgebildet, insbesondere weist er eine L-form auf. Der zweite Stützabschnitt 34 weist einen mit dem ersten Bauteil 12 verbundenen Basisabschnitt 40 und einen mit dem Zentrierabschnitt 38 mittels eines Distanzhalteelements 39 in Verbindung stehenden Eingriffsabschnitt 42 auf. Die Übergänge bzw. Krümmungen 44 zwischen dem ersten Bauteil 12 und dem Basisabschnitt 40 bzw. zwischen dem Basisabschnitt 40 und dem Eingriffsabschnitt 42 sind dabei so gewählt, dass die Fasern des CMC-Materials an diesen Stellen entsprechend gebogen, aber nicht geknickt oder gebrochen sind, so dass der zweite Stützabschnitt 34 eine gewünschte Stabilität und Festigkeit aufweist. Der zweite Stützabschnitt 34 dient im vorliegenden Beispiel insbesondere dazu, eine Bewegung des ersten Bauteils 12 nach radial innen zu verhindern. Es wird darauf hingewiesen, dass ein zweiter Stützabschnitt 34, der an einem zweiten Bauteil 14 vorgesehen ist, in der Schnittdarstellung im Wesentlichen gleich bzw. analog aufgebaut ist, wie dies in der Fig. 2A für den zweiten Stützabschnitt 34 des ersten Bauteils 12 dargestellt ist; insoweit könnte die Fig. 2B auch etwa einem Schnitt entlang der Linie B'-B' der Fig. 1 entsprechen.

Das Distanzhalteelement 39 weist die Form eines winkligen U-Profils auf (Fig. 1), wobei die Basis 41 des U-Profils dem hintergreifenden zweiten Stützabschnitt 34 zugewandt ist und wobei die Schenkel 43 des U-Profils sich im Wesentlichen in Radialrichtung RR erstrecken und auf dem Zentrierelement 30 bzw. dessen Zentrierabschnitt 38 abgestützt sind. Der Eingriffsabschnitt 42 des zweiten Stützabschnitts 34 und die Basis 41 des Distanzhalteelements 39 sind mittels einer Nietverbindung 45 verbunden. Hierzu weisen der Eingriffsabschnitt 42 und die Basis 42 des Distanzhalteelements 39 entsprechende Öffnungen auf, durch die ein Niet 45 hindurchgeführt ist. Das Zentrierelement 30 ist in Umfangsrichtung UR durch Sicherungsabschnitte 48 gehalten. Die Sicherungsabschnitte 48 sind entlang der Umfangsrichtung UR abschnittsweise am Zentrierabschnitt 38 des Zentrierelements 30 ausgebildet, insbesondere als radiale Vorsprünge. Die Sicherungsabschnitte 48 dienen insbesondere dazu, in Umfangrichtung UR als Anschlag für die Zentrierelemente 30 zu dienen. Entsprechend ist eine Bewegung in Umfangsrichtung UR der Zentrierelemente 30 eingeschränkt. Insoweit dienen die Sicherungsabschnitte 48 als Umfangssicherung für die Zentrierelemente 30. Auch wenn in der Fig. 1 nur bei einem zweiten Stützabschnitt 34 bzw. Distanzhalteelement 39 Sicherungsabschnitte 48 dargestellt sind, können solche Sicherungsabschnitte 48 auch bei weiteren (mehreren) oder allen anderen zweiten Stützabschnitten 34 vorgesehen sein.

Die Schnittansicht der Fig. 2C zeigt den Schnitt entsprechend der Schnittlinie C-C der Fig. 1 im Übergangsbereich 26 zwischen dem ersten Bauteil 12 und dem zweiten Bauteil 14. Aus der Darstellung ist ersichtlich, dass die beiden Überlappungsabschnitte 22, 24 in Radialrichtung RR übereinander angeordnet sind. Die Überlappungsabschnitte 22, 24 liegen im Übergangsbereich 26 aneinander an. Das erste Bauteil 12, das hier mit seinem Überlappungsabschnitt 22 radial außen angeordnet ist, weist einen weiteren radialen Vorsprung 35 auf. Dieser radiale Vorsprung 35 liegt an dem Zentrierabschnitt 38 des Zentrierelements 30 an. Anders ausgedrückt wird das Zentrierelement 30 bzw. dessen Zentrierabschnitt 38 von radial innen durch den Vorsprung 35 beaufschlagt. Der radiale Vorsprung 35 bildet in Umfangsrichtung insbesondere eine Art Fortsetzung des ersten Stützabschnitts 32.

Der erste Stützabschnitt 32 des ersten Bauteils (Fig. 2B) und der erste Stützabschnitt 35 des zweiten Bauteils 14 (Fig. 2C) unterscheiden sich im Wesentlichen nur durch ihre radiale Ausdehnung bzw. Dicke. Ihre Funktion und die Art der Ausgestaltung als Vorsprung bzw. Verdickung ist im Wesentlichen gleich.

Aus der Zusammenschau der Fig. 1 und 2 und der daraus ersichtlichen Anordnung von ersten und zweiten Stützabschnitten 32, 34 ist ersichtlich, dass hierdurch die ersten und zweiten Bauteile 12, 14 am betreffenden Zentrierelement 30, insbesondere dessen Zentrierabschnitt 38 so abgestützt sind, dass sie in Radialrichtung RR im Wesentlichen unbeweglich sind relativ zum Zentrierelement 30. Die Anordnung von ersten Stützabschnitten 32 und zweiten Stützabschnitten, die den Zentrierabschnitt 38 jeweils von unterschiedlichen Seiten (von radial innen oder radial außen) beaufschlagen, ermöglichen also eine gewünschte Zentrierung der ersten und zweiten Bauteile 12, 14 bezogen auf eine Maschinenachse. Ferner wird durch diese radiale Fixierung ein radiales Aufklappen der Bauteile 12, 14, insbesondere im Übergangsbereich 26 (Überlappung) verhindert.

Der Vollständigkeit halber wird noch darauf hingewiesen, dass in den Fig. 2A bis 2C ein sogenannter Sicherungsring 50 dargestellt ist, durch den das Zentrierelement 30 axial in seiner Bewegung eingeschränkt wird bzw. in seiner gewünschten Position gehalten wird. Ferner sind in der Fig. 2C gestrichelte Linien 52 dargestellt für die Überlappungsbereiche 22, 24. Diese gestrichelten Linien 52 zeigen rein schematisch eine Materialverdickung an den entsprechenden Stellen der Bauteile 12, 14, wobei diese Materialverdickungen 52 bei Bedarf abgetragen werden können, um Toleranzen bei der Endmontage von CMC-Bauteilen ausgleichen zu können.

Die hier dargestellte Zentrierung von Bauteilen 12, 14 ist in Bezug auf eine Hauptströmungsrichtung in dem Turbinenzwischengehäuse 10 vorne bzw. an einer Eintrittsöffnung vorgesehen. Eine solche Eintrittsöffnung folgt in Strömungsrichtung in der Regel auf eine erste Turbinenstufe, insbesondere eine Hochdruckturbine. Die hier dargestellten ersten und zweiten Bauteile 12, 14 samt ihrer ersten bzw. zweiten Stützabschnitte 32, 34 sind aus einem keramischen Faserverbundwerkstoff (CMC) hergestellt, wobei die Form und Anordnung der Stützabschnitte 32, 34 so gewählt ist, dass diese aus CMC herstellbar sind und für ihre Funktion entsprechende Festigkeits- und Stabilitätsanforderungen erfüllen. Das Vorsehen eines Distanzhalteelements 39 stellt dabei eine anpassbare Möglichkeit für die Befestigung von zweiten Stützabschnitten 34 am Zentrierelement 30 dar. Insbesondere kann das Distanzhalteelement 39 in seinen Dimensionen auch an andere Zentrierelemente oder andere zweite Stützabschnitt angepasst werden. Es ist auch denkbar, dass entlang des Umfangs nicht nur gleiche Distanzhalteelemente 39 eingesetzt werden, so wie dies im dargestellten Ausführungsbeispiel der Fall ist, sondern dass die Distanzhalteelemente 39 unterschiedlich dimensioniert sind, etwa, wenn ein Dichtungsabschnitt 36 des Zentrierelements 30 in Radialrichtung kürzer ausgestaltet ist. Die in der Fig. 2B dargestellte Nietverbindung 45 ist eine beispielhafte Möglichkeit der Verbindung zwischen dem zweiten Stützabschnitt 34 und dem Distanzhalteelement 39. Diese Verbindung könnte auch stoffschlüssige hergestellt werden, insbesondere geklebt werden.

### Bezugszeichenliste

- 10: Turbinenzwischengehäuse
- 12: erstes Bauteil
- 14: zweites Bauteil
- 16: Strömungskanal zugewandte Seite
- 18: Strömungskanal zugewandte Seite
- 20: Strömungskanal
- 22: erster Überlappungsabschnitt
- 24: zweiter Überlappungsabschnitt
- 26: Übergangsbereich
- 30: Zentrierelement
- 32: erster Stützabschnitt
- 33: radiale Verdickung
- 34: zweiter Stützabschnitt
- 35: radialer Vorsprung
- 36: Dichtungsabschnitt
- 38: Zentrierabschnitt
- 39: Distanzhalteelement
- 40: Basisabschnitt
- 41: Basis
- 42: Eingriffsabschnitt
- 43: Schenkel
- 44: Krümmung
- 45: Niet(-verbindung)
- 46: Aussparung
- 48: Sicherungsabschnitt
- 50: Sicherungsring
- 51: Hitzeschutzelement
- 52: Materialverdickung (gestrichelte Linie)

## Patentansprüche

1. Turbinenzwischengehäuse für eine Gasturbine, insbesondere Fluggasturbine, mit
mehreren ersten Bauteilen (12) und mehreren zweiten Bauteilen (14), die in Umfangsrichtung (UR) abwechselnd nebeneinander angeordnet sind und in Radialrichtung (RR) einen Heißgas führenden Strömungskanal (20) begrenzen, wobei die ersten Bauteile (12) jeweils zwei erste Überlappungsabschnitte (22) aufweisen und die zweiten Bauteile (14) jeweils zwei zweite Überlappungsabschnitte (24) aufweisen, derart, dass in einem jeweiligen Bereich (26) des Übergangs von einem ersten Bauteil (12) zu einem zweiten Bauteil (14) oder umgekehrt der erste Überlappungsabschnitt (22) und der zweite Überlappungsabschnitt (24) überlappend angeordnet sind, wobei die ersten Bauteile (12) identisch mit den zweiten Bauteilen (14) ausgebildet sind oder die ersten Bauteile sich von den zweiten Bauteilen unterscheiden, und
mit wenigstens einem Zentrierelement (30), an dem die ersten Bauteile (12) und die zweiten Bauteile (14) entlang der Umfangsrichtung (UR) und in Radialrichtung (RR) abgestützt sind, derart, dass die ersten Bauteile (12) und die zweiten Bauteile (14) bezogen auf eine Zentralachse des Turbinenzwischengehäuses im Wesentlichen zentriert angeordnet sind,
**dadurch gekennzeichnet, dass** die ersten Bauteile (12) und die zweiten Bauteile (14) aus einem keramischen Faserverbundwerkstoff (CMC) hergestellt sind und dass an jedem ersten Bauteil (12) und an jedem zweiten Bauteil (14) wenigstens ein erster Stützabschnitt (32) und wenigstens ein zweiter Stützabschnitt (34) vorgesehen sind, wobei der erste Stützabschnitt (32) und der zweite Stützabschnitt (34) so ausgebildet sind, dass sie das Zentrierelement (30) in Radialrichtung (RR) von unterschiedlichen Seiten beaufschlagen, und wobei der zweite Stützabschnitt (34) das Zentrierelement (30) mittels eines Distanzhalteelements (39) beaufschlagt.

2. Turbinenzwischengehäuse nach Anspruch 1, **dadurch gekennzeichnet, dass** der erste Stützabschnitt (32) und der zweite Stützabschnitt (34) aus dem keramischen Faserverbundwerkstoff (CMC) hergestellt sind.

3. Turbinenzwischengehäuse nach Anspruch 1 oder 2, **dadurch gekennzeichnet, dass** der erste Stützabschnitt (32) als radialer Vorsprung, insbesondere als radiale Verdickung, eines betreffenden ersten Bauteils (12) oder eines betreffenden zweiten Bauteils (14) ausgebildet ist.

4. Turbinenzwischengehäuse nach Anspruch 3, **dadurch gekennzeichnet, dass** alle radialen Vorsprünge (32) das Zentrierelement (30) in Radialrichtung (RR) von einer gleichen ersten Seite her beaufschlagen.

5. Turbinenzwischengehäuse nach einem der vorhergehenden Ansprüche, **dadurch gekennzeichnet, dass** der zweite Stützabschnitt (34) hakenförmig ausgebildet ist, insbesondere als L-förmiger Haken.

6. Turbinenzwischengehäuse nach Anspruch 5, **dadurch gekennzeichnet, dass** alle hakenförmigen zweiten Stützabschnitte (34) das Distanzhalteelement (39) hintergreifen und in Radialrichtung (RR) von einer gleichen zweiten Seite her beaufschlagen.

7. Turbinenzwischengehäuse nach einem der vorhergehenden Ansprüche, **dadurch gekennzeichnet, dass** das Zentrierelement (30) einen sich in Axialrichtung (AR) und Umfangsrichtung (UR) erstreckenden Zentrierabschnitt (38) aufweist, wobei die ersten Stützabschnitte (32) und die betreffenden Distanzhalteelemente (39) jeweils an dem Zentrierabschnitt (38), insbesondere auf gegenüberliegenden Seiten des Zentrierabschnitts (38), anliegen und wobei die zweiten Stützabschnitte (34) jeweils an den der betreffenden Distanzhalteelementen (39) anliegen.

8. Turbinenzwischengehäuse nach einem der vorhergehenden Ansprüche, **dadurch gekennzeichnet, dass** das Distanzhalteelement (39) derart dimensioniert ist, dass es einen radialen Abstand zwischen dem zweiten Stützabschnitt (34) und dem Zentrierelement (30) überbrückt.

9. Turbinenzwischengehäuse nach Anspruch 8, **dadurch gekennzeichnet, dass** das Distanzhalteelement (39) mittels einer Nietverbindung (45) mit dem zweiten Stützabschnitt (34) verbunden ist.

10. Turbinenzwischengehäuse nach Anspruch 8 oder 9, **dadurch gekennzeichnet, dass** das Distanzhalteelement (39) die Form eines winkligen U-Profils aufweist, wobei die Basis (41) des U-Profils dem hintergreifenden zweiten Stützabschnitt (34) zugewandt ist und wobei die Schenkel (43) des U-Profils sich im Wesentlichen in Radialrichtung (RR) erstrecken und auf dem Zentrierelement (30) abgestützt sind.

11. Turbinenzwischengehäuse nach einem der vorhergehenden Ansprüche, **dadurch gekennzeichnet, dass** am Zentrierelement (30) sich im Wesentlichen in Radialrichtung (RR) erstreckende Sicherungsvorsprünge (48) vorgesehen sind, wobei das Distanzhalteelement (39) in Umfangsrichtung (UR) zwischen zwei Sicherungsvorsprüngen (48) aufgenommen ist.

12. Turbinenzwischengehäuse nach einem der vorhergehenden Ansprüche, **dadurch gekennzeichnet, dass** an jedem ersten Bauteil (12) und an jedem zweiten Bauteil (14) wenigstens zwei zweite Stützabschnitte (34) vorgesehen sind, wobei jeder zweite Stützabschnitt (34) mittels eines Distanzhalteelements (39) am Zentrierelement (30) abgestützt ist.

13. Turbinenzwischengehäuse nach einem der vorhergehenden Ansprüche, **dadurch gekennzeichnet, dass** zwischen den ersten Stützabschnitten (32) und dem Zentrierelement (30) entlang der Umfangsrichtung (UR) wenigstens teilweise ein Hitzeschutzelement (51) angeordnet ist, wobei an den ersten Bauteilen (12) oder/und an den zweiten Bauteilen (14) ein dritter Stützabschnitt (53) vorgesehen ist, auf dem das Hitzeschutzelement (51) aufliegt.

14. Turbinenzwischengehäuse nach einem der vorhergehenden Ansprüche, **dadurch gekennzeichnet, dass** sich ein jeweiliger erster Stützabschnitt (32) und ein jeweils zugehöriger zweiter Stützabschnitt (34) an einer im Wesentlichen gleichen Umfangsposition vorgesehen sind.

15. Gasturbine, insbesondere Fluggasturbine mit einem Turbinenzwischengehäuse (10) nach einem der vorhergehenden Ansprüche, wobei das Turbinenzwischengehäuse (10) zwischen einer ersten Turbinenstufe, insbesondere Hochdruckturbine, und einer folgenden Turbinenstufe, insbesondere Mitteldruck oder Niederdruckturbine, angeordnet ist, wobei vorzugsweise das Zentrierelement (30), die ersten Stützabschnitte (32) und die zweiten Stützabschnitte (34) sich bezogen auf die Hauptströmungsrichtung der Gasturbine an die erste Turbinenstufe anschließen.

## Claims

1. Intermediate turbine housing for a gas turbine, in particular an aircraft gas turbine, comprising
a plurality of first components (12) and a plurality of second components (14), which are alternatingly arranged next to one another in the circumferential direction (UR) and delimit a hotgas guiding flow channel (20) in the radial direction (RR), the first components (12) each comprising two first overlapping portions (22) and the second components (14) each comprising two second overlapping portions (24) such that in a particular region (26) of the transition from a first component (12) to a second component (14), or vice versa, the first overlapping portion (22) and the second overlapping portion (24) are arranged so as to overlap, the first components (12) being identical to the second components (14) or the first components differing from the second components, and
comprising at least one centering element (30) on which the first components (12) and the second components (14) are supported in the circumferential direction (UR) and in the radial direction (RR) such that the first components (12) and the second components (14) are arranged so as to be substantially centered relative to a central axis of the intermediate turbine housing,
**characterized in that** the first components (12) and the second components (14) are made of a ceramic matrix composite (CMC) and that at least one first support portion (32) and at least one second support portion (34) are provided on each first component (12) and on each second component (14), the first support portion (32) and the second support portion (34) being designed such that they impinge on the centering element (30) from different sides in the radial direction (RR) and the second support portion (34) impinging on the centering element (30) by means of a spacer element (39).

2. Intermediate turbine housing according to claim 1, **characterized in that** the first support portion (32) and the second support portion (34) are made of the ceramic matrix composite (CMC).

3. Intermediate turbine housing according to either claim 1 or claim 2, **characterized in that** the first support portion (32) is in the form of a radial projection, in particular a radial thickened region, of a relevant first component (12) or of a relevant second component (14).

4. Intermediate turbine housing according to claim 3, **characterized in that** all the radial projections (32) impinge on the centering element (30) from the same first side in the radial direction (RR).

5. Intermediate turbine housing according to any of the preceding claims, **characterized in that** the second support portion (34) is hook-shaped, in particular is in the form of an L-shaped hook.

6. Intermediate turbine housing according to claim 5, **characterized in that** all the hook-shaped second support portions (34) engage behind the spacer element (39) and impinge on said element from the same second side in the radial direction (RR).

7. Intermediate turbine housing according to any of the preceding claims, **characterized in that** the centering element (30) comprises a centering portion (38) extending in the axial direction (AR) and circumferential direction (UR), the first support portions (32) and the relevant spacer elements (39) each resting on the centering portion (38), in particular on opposite sides of the centering portion (38) and the second support portions (34) each resting the relevant spacer elements (39).

8. Intermediate turbine housing according to any of the preceding claims, **characterized in that** the spacer element (39) is dimensioned such that it spans a radial distance between the second support portion (34) and the centering element (30).

9. Intermediate turbine housing according to claim 8, **characterized in that** the spacer element (39) is connected to the second support portion (34) by means of a rivet connection (45).

10. Intermediate turbine housing according to either claim 8 or claim 9, **characterized in that** the spacer element (39) is in the form of an angular U-profile, the base (41) of the U-profile facing the engaging second support portion (34) and the limbs (43) of the U-profile extending substantially in the radial direction (RR) and being supported on the centering element (30).

11. Intermediate turbine housing according to any of the preceding claims, **characterized in that** securing projections (48) which extend substantially in the radial direction (RR) are provided on the centering element (30), the spacer element (39) being received between two securing projections (48) in the circumferential direction (UR).

12. Intermediate turbine housing according to any of the preceding claims, **characterized in that** at least two second support portions (34) are provided on each first component (12) and on each second component (14), each second support portion (34) being supported on the centering element (30) by means of a spacer element (39).

13. Intermediate turbine housing according to any of the preceding claims, **characterized in that** a heat-protection element (51) is arranged at least in part in the circumferential direction (UR) between the first support portions (32) and the centering element (30), a third support portion (53) being provided on the first components (12) and/or on the second components (14), on which third support portion the heat-protection element (51) rests.

14. Intermediate turbine housing according to any of the preceding claims, **characterized in that** a particular first support portion (32) and a second support portion (34) associated therewith are provided at substantially the same circumferential position.

15. Gas turbine, in particular an aircraft gas turbine comprising an intermediate turbine housing (10) according to any of the preceding claims, wherein the intermediate turbine housing (10) is arranged between a first turbine stage, in particular a high-pressure turbine, and a subsequent turbine stage, in particular a medium-pressure or low-pressure turbine, wherein preferably the centering element (30), the first support portions (32) and the second support portions (34) are connected to the first turbine stage, relative to the main flow direction of the gas turbine.

## Revendications

1. Boîtier intermédiaire de turbine pour une turbine à gaz, en particulier pour une turbine à gaz d'avion, comportant
une pluralité de premiers composants (12) et une pluralité de seconds composants (14) qui sont disposés alternativement les uns à côté des autres dans la direction circonférentielle (UR) et délimitent un conduit d'écoulement (20) transportant du gaz chaud dans la direction radiale (RR), dans lequel les premiers composants (12) comportent chacun deux premières sections de chevauchement (22) et les seconds composants (14) comportent chacun deux secondes sections de chevauchement (24), de sorte que, dans une zone respective (26) du passage d'un premier composant (12) à un second composant (14) ou vice versa, la première section de chevauchement (22) et la seconde section de chevauchement (24) sont disposées de manière à se chevaucher, les premiers composants (12) étant conçus de manière identique aux seconds composants (14) ou les premiers composants étant différents des seconds composants, et
au moins un élément de centrage (30), sur lequel les premiers composants (12) et les seconds composants (14) sont supportés le long de la direction circonférentielle (UR) et dans la direction radiale (RR), de sorte que les premiers composants (12) et les seconds composants (14) sont disposés de manière sensiblement centrée par rapport à un axe central du boîtier intermédiaire de turbine,
**caractérisé en ce que** les premiers composants (12) et les seconds composants (14) sont constitués d'un matériau composite céramique à fibres (CMC) et **en ce qu'**au moins une première section d'appui (32) et au moins une seconde section d'appui (34) sont prévues au niveau de chaque premier composant (12) et au niveau de chaque second composant (14), la première section d'appui (32) et la seconde section d'appui (34) étant conçues de sorte qu'elles sollicitent l'élément de centrage (30) dans la direction radiale (RR) à partir de différents côtés, et la seconde section d'appui (34) sollicitant l'élément de centrage (30) au moyen d'un élément écarteur (39).

2. Boîtier intermédiaire de turbine selon la revendication 1, **caractérisé en ce que** la première section d'appui (32) et la seconde section d'appui (34) sont constituées du matériau composite céramique à fibres (CMC).

3. Boîtier intermédiaire de turbine selon la revendication 1 ou 2, **caractérisé en ce que** la première section d'appui (32) est réalisée sous la forme d'une saillie radiale, en particulier d'un épaississement radial, d'un premier composant (12) respectif ou d'un second composant (14) respectif.

4. Boîtier intermédiaire de turbine selon la revendication 3, **caractérisé en ce que** toutes les saillies radiales (32) sollicitent l'élément de centrage (30) dans la direction radiale (RR) à partir d'un même premier côté.

5. Boîtier intermédiaire de turbine selon l'une des revendications précédentes, **caractérisé en ce que** la seconde section d'appui (34) est conçue en forme de crochet, en particulier en forme de crochet en L.

6. Boîtier intermédiaire de turbine selon la revendication 5, **caractérisé en ce que** toutes les secondes sections d'appui (34) en forme de crochet viennent en prise derrière l'élément écarteur (39) et le sollicitent dans la direction radiale (RR) à partir d'un même second côté.

7. Boîtier intermédiaire de turbine selon l'une des revendications précédentes, **caractérisé en ce que** l'élément de centrage (30) comporte une section de centrage (38) s'étendant dans la direction axiale (AR) et la direction circonférentielle (UR), dans lequel les premières sections d'appui (32) et les éléments écarteurs (39) respectifs reposent chacun sur la section de centrage (38), en particulier sur les côtés opposés de la section de centrage (38), et dans lequel les secondes sections d'appui (34) reposent respectivement sur les éléments écarteurs (39) respectifs.

8. Boîtier intermédiaire de turbine selon l'une des revendications précédentes, **caractérisé en ce que** l'élément écarteur (39) est dimensionné pour combler une distance radiale entre la seconde section d'appui (34) et l'élément de centrage (30).

9. Boîtier intermédiaire de turbine selon la revendication 8, **caractérisé en ce que** l'élément écarteur (39) est relié à la seconde section d'appui (34) au moyen d'une liaison rivetée (45).

10. Boîtier de turbine intermédiaire selon la revendication 8 ou 9, **caractérisé en ce que** l'élément écarteur (39) présente la forme d'un profilé en U angulaire, dans lequel la base (41) du profilé en U est orientée vers la seconde section d'appui (34) en prise par l'arrière, et dans lequel les bras (43) du profilé en U s'étendent sensiblement dans la direction radiale (RR) et reposent sur l'élément de centrage (30).

11. Boîtier intermédiaire de turbine selon l'une des revendications précédentes, **caractérisé en ce que** des saillies de fixation (48) s'étendant sensiblement dans la direction radiale (RR) sont prévues au niveau de l'élément de centrage (30), l'élément écarteur (39) étant logé dans la direction périphérique (UR) entre deux saillies de fixation (48).

12. Boîtier intermédiaire de turbine selon l'une des revendications précédentes, **caractérisé en ce qu'**au moins deux secondes sections d'appui (34) sont prévues au niveau de chaque premier composant (12) et au niveau de chaque second composant (14), chaque seconde section d'appui (34) étant supportée sur l'élément de centrage (30) au moyen d'un élément écarteur (39).

13. Boîtier intermédiaire de turbine selon l'une des revendications précédentes, **caractérisé en ce qu'**un élément de protection thermique (51) est disposé au moins partiellement le long de la direction circonférentielle (UR) entre les premières sections d'appui (32) et l'élément de centrage (30), dans lequel une troisième section de protection thermique (53), sur laquelle l'élément de protection thermique (51) repose, est prévue au niveau des premiers composants (12) et/ou au niveau des seconds composants (14).

14. Boîtier intermédiaire de turbine selon l'une des revendications précédentes, **caractérisé en ce qu'**une première section d'appui (32) respective et une seconde section d'appui (34) associée respective sont prévues à une position circonférentielle sensiblement égale.

15. Turbine à gaz, en particulier turbine à gaz d'avion comprenant un boîtier intermédiaire de turbine (10) selon l'une des revendications précédentes, dans laquelle le boîtier intermédiaire de turbine (10) est disposé entre un premier étage de turbine, en particulier une turbine haute pression, et un étage de turbine suivant, en particulier une turbine à moyenne ou à basse pression, dans laquelle, de préférence, l'élément de centrage (30), les premières sections d'appui (32) et les secondes sections d'appui (34) sont reliés au premier étage de turbine par rapport à la direction d'écoulement principale de la turbine à gaz.
